# DEMANDE DE BREVET EUROPEEN

(11) **EP 0 653 167 A1**
(43) Date de publication de la demande: **17.05.1995**
(21) Numéro de dépôt: 94440071.2
(22) Date de dépôt: 14.11.1994
(51) Int. Cl.: A23L 1/318

(54) **Produit alimentaire à base de viande de lapin et procédé de préparation d'un tel produit**

(30) Priorité: 15.11.1993 FR 9313748
(71) Demandeur: LES FUMES DES VOSGES DU NORD (SARL), F-67340 Weiterswiller (FR)
(72) Inventeur: Gutfried, Patrick, F-67340 Weiterswiller (FR); Diebolt Gutfried, Chantal, F-67340 Weiterswiller (FR)
(74) Mandataire: Nuss, Pierre

(57) **Abrégé**

La présente invention concerne un produit alimentaire à base de viande de lapin et un procédé de préparation d'un tel produit.

Produit alimentaire caractérisé en ce qu'il est essentiellement constitué par la viande d'au moins un lapin entier désossée, à l'exception des abats, roulée, macérée dans une saumure et fumée.

L'invention est plus particulièrement applicable à la valorisation de la viande de lapin sous forme d'une charcuterie.

## Description

La présente invention concerne le domaine de l'industrie alimentaire, en particulier des préparations de viande ou à base de viande, et a pour objet un produit alimentaire à base de viande de lapin.

L'invention a également pour objet un procédé de préparation d'un tel produit.

Il existe actuellement diverses préparations de viande ou à base de viande ayant pour but de proposer au consommateur un produit final qui, soit peut être servi après simple réchauffage, il s'agit, en l'occurence de plats cuisinés, soit présente des qualités organoleptiques améliorées ou modifiées par rapport à la viande de base. Dans ce dernier cas, la viande subit généralement un traitement spécifique, par exemple par saumurage et/ou par fumage ou séchage.

De tels procédés de traitement sont ainsi connus, notamment pour certains morceaux du porc, à savoir, notamment, les jambons et la poitrine.

Un tel traitement présente l'avantage de rendre les morceaux concernés plus goûteux et permet leur dégustation sans cuisson préalable.

En ce qui concerne les viandes à faible teneur en lipides, en particulier le lapin, ces dernières souffrent généralement, malgré leur grande qualité diététique due à leur faible teneur en cholestérol, d'une certaine fadeur nécessitant une préparation relevée et/ou très élaborée.

En outre, ces viandes n'ont, à ce jour, pas fait l'objet d'un traitement permettant leur consommation sans cuisson préalable, par exemple comme charcuterie, de sorte que leur consommation est toujours restée relativement restreinte.

La présente invention a pour but de pallier ces inconvénients.

Elle a, en effet, pour objet un produit alimentaire à base de viande de lapin caractérisé en ce qu'il est essentiellement constitué par la viande d'au moins un lapin entier désossée, à l'exception des abats, roulée, macérée dans une saumure et fumée.

L'invention a également pour objet un procédé de préparation d'un tel produit caractérisé en ce qu'il consiste essentiellement à désosser au moins une carcasse de lapin et à en retirer les abats, à attendrir le ou les morceaux ainsi obtenus, puis à inciser la fine pellicule de peau extérieure de ce ou de ces morceaux et à rouler ce ou ces derniers en tournant ladite pellicule de peau extérieure vers l'intérieur, à tirer ensuite sur le roulé ainsi réalisé un filet élastique, à faire macérer alors le roulé obtenu dans une saumure épicée, à dessaler ledit rouleau après macération et, ensuite, à le fumer.

L'attendrissement du ou des morceaux de viande après désossage est avantageusement effectué pendant environ 10 minutes à température ambiante au moyen d'un attendrisseur de type connu.

L'incision de la fine pellicule de peau extérieure du ou des morceaux de viande désossée est destinée à rendre cette pellicule perméable au passage de la fumée lors du fumage, afin que ce dernier s'effectue de manière homogène pour l'ensemble du produit final.

Le filet élastique tiré sur le roulé est, de préférence, un filet de type connu d'un diamètre nominal de 5 centimètres et est destiné à maintenir la cohésion de la viande roulée pendant le fumage et le retrait correspondant de celle-ci, afin d'éviter tout risque de formation d'une poche d'air, qui serait préjudiciable à une bonne conservation du produit final.

La macération du roulé obtenu dans une saumure épicée est effectuée pendant environ 10 jours à une température de l'ordre de 10°C. A cet effet, la macération sera avantageusement effectuée dans une chambre froide.

Après macération, le dessalage du roulé est réalisé dans une eau claire pendant une durée comprise entre deux heures et trois heures. Un tel dessalage est destiné à l'élimination des dépôts extérieurs de saumure et d'épices avant le fumage.

Cette dernière opération est effectuée pendant environ 6 à 8 jours dans une chambre de fumage à froid, à partir de fumée de sciure de sapin. La durée de fumage est fonction de l'épaisseur du roulé et est déterminée par la raideur du produit final à obtenir. En effet, la raideur étant directement fonction du degré d'assèchement de la viande, un diamètre plus important du roulé nécessitera un séjour plus long dans la chambre de fumage.

L'invention a également pour objet une saumure épicée, mise en oeuvre pour la préparation du produit à base de viande de lapin, caractérisée en ce qu'elle est essentiellement constituée par un mélange dans l'eau de sel, de sucre semoule, de coriandre concassée, de baies de genièvre concassées, de clous de girofle, d'ail, de feuilles de laurier, de muscade moulue et de poivre.

Le sel utilisé est, de préférence, un sel nitrité. En effet, un tel sel permet l'obtention d'une coloration rouge de la viande, qui est plus en conformité avec les goûts du consommateur.

Le poivre utilisé est avantageusement un poivre blanc en poudre.

A titre d'exemple, une saumure d'un volume de 10 litres présente avantageusement la composition suivante :
- eau: 10 litres
- sel nitrité: 1,7 kg
- sucre semoule: 5 cuillères à café
- coriandre concassée: 25 g
- baies de genièvre concassées: 15 g
- clous de girofle: 12 g
- ail: 100 g environ (1 tête)
- feuilles de lauriers: 10
- muscade moulue: 7 g
- poivre blanc en poudre: 5 g

Grâce à l'invention, il est possible de réaliser un nouveau produit alimentaire à base de viande de lapin et ainsi de valoriser cette dernière également sous forme d'un produit de charcuterie pouvant être consommé, du fait de son goût plaisant, directement sans nécessiter d'autre préparation culinaire.

En outre, le produit obtenu présente un intérêt particulier du fait de ses qualités diététiques, qui le classe parmi les charcuteries naturellement pauvres en cholestérol.

Bien entendu, l'invention n'est pas limitée au mode de réalisation décrit. Des modifications restent possibles, sans sortir pour autant du domaine de protection de l'invention.

## Revendications

1. Produit alimentaire à base de viande de lapin caractérisé en ce qu'il est essentiellement constitué par la viande d'au moins un lapin entier désossée, à l'exception des abats, roulée, macérée dans une saumure et fumée.

2. Procédé de préparation du produit alimentaire suivant la revendication 1, caractérisé en ce qu'il consiste essentiellement à désosser au moins une carcasse de lapin et à en retirer les abats, à attendrir le ou les morceaux ainsi obtenus, puis à inciser la fine pellicule de peau extérieure de ce ou de ces morceaux et à rouler ce ou ces derniers en tournant ladite pellicule de peau extérieure vers l'intérieur, à tirer ensuite sur le roulé ainsi réalisé un filet élastique, à faire macérer alors le roulé obtenu dans une saumure épicée, à dessaler ledit rouleau après macération et, ensuite, à le fumer.

3. Procédé, suivant la revendication 2, caractérisé en ce que l'attendrissement du ou des morceaux de viande après désossage est avantageusement effectué pendant environ 10 minutes à température ambiante au moyen d'un attendrisseur.

4. Procédé, suivant la revendication 2, caractérisé en ce que la macération du roulé obtenu dans une saumure épicée est effectuée pendant environ 10 jours à une température de l'ordre de 10°C.

5. Procédé, suivant la revendication 2, caractérisé en ce que le dessalage du roulé est réalisé dans une eau claire pendant une durée comprise entre deux heures et trois heures.

6. Procédé, suivant la revendication 2, caractérisé en ce que le fumage est effectué pendant environ 6 à 8 jours dans une chambre de fumage à froid, à partir de fumée de sciure de sapin.

7. Saumure épicée, mise en oeuvre par le procédé suivant l'une quelconque des revendications 2 à 6, caractérisée en ce qu'elle est essentiellement constituée par un mélange dans l'eau de sel, de sucre semoule, de coriandre concassée, de baies de genièvre concassées, de clous de girofle, d'ail, de feuilles de laurier, de muscade moulue et de poivre.

8. Saumure, suivant la revendication 7, caractérisée en ce que le sel utilisé est, de préférence, un sel nitrité.

9. Saumure, suivant la revendication 7, caractérisée en ce que le poivre utilisé est avantageusement un poivre blanc en poudre.

10. Saumure, suivant l'une quelconque des revendications 7 à 9, caractérisée en ce que, pour un volume de 10 litres, elle présente avantageusement la composition suivante :
eau 10 litres
sel nitrité 1,7 kg
sucre semoule 5 cuillères à café
coriandre concassée 25 g
baies de genièvre concassées 15 g
clous de girofle 12 g
ail 100 g environ (1 tête)
feuilles de lauriers 10
muscade moulue 7 g
poivre blanc en poudre 5 g
